(19) Europäisches Patentamt
European Patent Office
Office européen des brevets

(11) **EP 3 805 975 A1**

(12) **EUROPEAN PATENT APPLICATION**

(43) Date of publication:
**14.04.2021 Bulletin 2021/15**

(51) Int Cl.:
**G06F 30/20** (2020.01)    **G06F 113/08** (2020.01)

(21) Application number: **20157170.0**

(22) Date of filing: **13.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF Coatings GmbH**
**48165 Münster (DE)**

(72) Inventors:
• **Zhmayev, Yevgen**
**48165 Münster (DE)**
• **Divvela, Mounica Jyothi**
**Hillsboro, OR 97124 (US)**

(74) Representative: **Raible Deissler Lehmann**
**Patentanwälte PartG mbB**
**Senefelderstrasse 26**
**70176 Stuttgart (DE)**

(54) **SIMULATING A BELL-SHAPED LIQUID SPRAY**

(57)    A method for simulating a bell-shaped liquid spray, the method comprising the steps of calculating a motion of a liquid jet of a bell-shaped liquid spray generated by a rotating spray nozzle and deriving at least one parameter value of the bell-shaped liquid spray from the calculated motion, and a computer program product for simulating a bell-shaped liquid spray.

Fig. 1

**Description**

**Field of the invention**

The invention relates to a method for simulating a bell-shaped liquid spray. The method comprises the steps of calculating a motion of a liquid jet of a bell-shaped liquid spray generated by a rotating spray nozzle and deriving at least one parameter value of the bell-shaped liquid spray from the calculated motion. Furthermore, the invention relates to a computer program product for simulating a bell-shaped liquid spray.

**Background**

Rotary bell spraying is widely used in automobile industry for providing a surface like a car body part with a coating. Rotary bell spraying is carried out by means of a bell-shaped spray nozzle, i.e. a spray nozzle formed as a cup, having a plurality of radial grooves being arranged equally-spaced at an inner periphery of a free edge of the spray nozzle.
During rotary bell spraying the spray nozzle rotates at an angular speed and a liquid, i.e. a coating material which usually comprises a solvent and a polymer solved in the solvent, is continuously fed to the spray nozzle at a flow rate. The provided liquid is released from the grooves of the rotating spray nozzle and forms a plurality of separate liquid jets each breaking up into a plurality of droplets which finally are deposited on the surface.
Finding a suitable formulation of a coating material may be based on either extensive practical testing or numeric calculating. The former requires carrying out a plurality of series of tests which is very time-consuming and expensive. The latter may be done by applying computational fluid dynamics (CFD) which generally comprises solving Navier-Stokes equations for the liquid by imposing the boundary conditions of the rotary bell spraying. Solving the Navier-Stokes equations, however, is based on a continuum computational model requiring a lot of computation time and, hence, is also very time-consuming and expensive.
Thus, it is desirable to have an alternative computational method which allows for efficiently and accurately predicting parameter values of a bell-shaped liquid spray, i.e. parameter values associated with the droplets of the bell-shaped liquid spray.

**Summary of the invention**

It is therefore an object of the invention to propose a method for simulating a bell-shaped liquid spray which allows for an efficient and accurate simulation.
One aspect of the invention is a method for simulating a bell-shaped liquid spray. The method comprises the steps of calculating a motion of a liquid jet of a bell-shaped liquid spray generated by a rotating spray nozzle and deriving at least one parameter value of the bell-shaped liquid spray from the calculated motion. The steps of calculating a motion and deriving at least one parameter are basic steps of the simulation of a bell spraying process.
According to the invention a bead chain comprising a plurality of beads and a plurality of springs is provided each pair of neighboring beads being connected by a spring and the bead chain simulating a liquid jet of a bell-shaped liquid spray generated by a rotating spray nozzle and the at least one parameter value of the bell-shaped liquid spray is derived from the calculated motion of the bead chain. The bead chain models, i.e. accurately approximates, the continuous liquid jet by means of a discretized structure which allows for a very efficient simulation.
Preferably, calculating a motion comprises calculating a motion of each bead of the bead chain in a Lagrangian approach. The Lagrangian approach covers the motion of the complete bead chain.
In an advantageous embodiment calculating a motion comprises setting up an equation of motion for each bead of the bead chain according to Newton's second law and solving the set-up equation of motion. The equations of motions according to Newton's second law may be set-up and solved easily as compared to the Navier-Stokes equations of CFD.

$$u_{jet} = \frac{\rho \Omega^2 R_{bell} sin(\theta) h_{jet}^2}{3\mu}$$

Therein, $u_{jet}$ is a velocity of the liquid jet, $R_{bell}$ is a peripheral radius of the spray nozzle, $\Omega$ is an angular speed of the spray nozzle, $\theta$ is an opening angle of the spray nozzle and $h_{jet}$ is a height of the liquid jet, $\rho$ is a density of the liquid and $\mu$ is a viscosity of the liquid.
The height of the liquid jet may be calculated by

$$h_{jet}^3 = \frac{3Q\mu}{2\rho\Omega^2 R_{bell}^2 sin(\theta)}$$

Therein, Q is a flow rate of the liquid fed to the spray nozzle.

In this embodiment setting up an equation of motion may comprise equalizing an acceleration of each bead multiplied with a mass of the bead and a force impacting on the bead. In other words, a force causes a change of momentum.

In another preferred embodiment setting up an equation of motion comprises superimposing a centrifugal force, a gravitational force, an electrostatic force, an aerodynamic drag force, a viscoelastic force and/or a surface tension force impacting on the bead.

With these forces the motion of equation of a bead of the bead chain is set up as follows.

$$m_i \frac{d^2\vec{x_i}}{dt^2} = \vec{F}_{s,i} + \vec{F}_{v,i} + \vec{F}_{e,i} + \vec{F}_{d,i} + \vec{F}_{g,i}$$

Therein, $m_i$ is the mass of bead i, $\frac{d^2\vec{x_i}}{dt^2}$ is the change of momentum, i.e. an acceleration, $\vec{F}_{s,i}$ is the surface tension force, $\vec{F}_{v,i}$ is the viscoelastic force, $\vec{F}_{e,i}$ is the electrostatic force, $\vec{F}_{d,i}$ is the aerodynamic drag force and $\vec{F}_{g,i}$ is the gravitational force.

The surface tension force may be written as a superposition of a bending force (first summand) and a capillary force (second summand):

$$\vec{F}_{s,i} = \pi\gamma \left(\frac{r_{di} + r_{ui}}{2}\right)^2 k_c \vec{u_i} + 2\pi\gamma(r_{di}\vec{e_{di}} - r_{ui}\vec{e_{ui}})$$

with

$$\vec{u_i} = \frac{\vec{e_{di}} - \vec{e_{ui}}}{|\vec{e_{di}} - \vec{e_{ui}}|}$$

Therein, $k_c$ is a local curvature of the liquid jet, $\gamma$ is a surface tension coefficient of the liquid, $\vec{e_{di}}, \vec{e_{ui}}$ is a unit vector directed to a neighboring bead, r is a distance to a neighboring bead, *di* is an index of a downstream bead and *ui* is an index of an upstream bead.

The viscoelastic force may be written as a superposition of forces due to an upstream neighboring bead and a downstream neighboring bead :

$$\vec{F_{v,i}} = -(\pi r_{ui}^2 \tau_{ui})\vec{e_{ui}} + (\pi r_{di}^2 \tau_{di})\vec{e_{di}}$$

Therein, $\tau$ is a viscoelastic stress strength which has solvent component and a polymer component. The solvent component is approximated to be three times a shear viscosity of the solvent according to Trouton and may be written

$$\tau_s = 3\mu_s \frac{dl}{ldt}$$

Therein, $\mu_s$ is a viscosity of the solvent. The polymer component may be written as

$$\tau_p = \tau_{p,11} - \tau_{p,22}$$

Therein, $\tau_{p,11}$ is an axial tensile stress and $\tau_{p,22}$ is a radial compressive stress which are diagonal elements of a polymer configuration tensor which according to the FENE-P model solves a differential equation

$$\lambda \langle \check{Q}Q \rangle = -\frac{\langle QQ \rangle}{1 - \frac{tr(\langle QQ \rangle)}{b_{max}}} + \delta$$

Therein, $\langle QQ \rangle$ is the polymer configuration tensor, $\langle \check{Q}Q \rangle$ is an upper-convected time derivative of the polymer configuration tensor, $\lambda$ is a polymer relaxation time and $b_{max}$ is a polymer chain extensibility. The FENE-P model relates to a non-linear finite extension of a polymer chain and is transformed to the Oldroyd B model relating to a linear infinite extension of a polymer chain by letting

$$b_{max} \rightarrow \infty$$

The aerodynamic drag force is caused by a flow of an air directed to the surface and extending along an outer periphery of the spray nozzle and may be written as a superposition of a tangential skin friction force (first summand) and a normal pressure drag force (second summand):

$$\overrightarrow{F_{d,l}} = \left( c_f \rho_{air} \pi r l |V_t| \overrightarrow{V_t} + c_p \rho_{air} r l |V_n| \overrightarrow{V_n} \right)$$

Therein, $C_f$ is a skin friction coefficient of the liquid, $c_p$ is a pressure drag coefficient of the liquid, $\rho_{air}$ is a density of the air, and r is a radius of the liquid jet, $l$ is a length of the liquid jet, $\overrightarrow{V_t}$ is a tangential velocity of an air relative to the liquid jet and $\overrightarrow{V_n}$ is a normal velocity of the air relative to the liquid jet.

A profile of the flow of air depends on a swirl number which may be written as

$$S = \frac{2\Omega R_{bell}}{U_{air}}$$

Therein, S is the swirl number and $U_{air}$ is a velocity of the air flow. A radial velocity profile of the flow of the air is similar to a gaussian distribution for low swirl numbers and similar to a bimodal distribution for high swirl numbers. An axial velocity profile of the flow of the air has a maximum which is close to the spray nozzle for low swirl numbers and distant from the spray nozzle for high swirl numbers.

The liquid jets delivered by the spray nozzle suffer from an axisymmetric instability which may be simulated by a normal mode perturbation of the bead at the spray nozzle. The normal mode perturbation may be applied to a steady state radius of the bead at the nozzle according to

$$a = a_s + \delta e^{\omega_0 t}$$

Therein, $a_s$ is the steady state radius, $\delta$ is an amplitude of the perturbation, $\omega_0$ is a frequency of the perturbation and t is a time.

As can be seen from the preceding formulas, the bell-shaped liquid spray may be simulated dependent on a plurality of different spray nozzles and a plurality of different liquids wherein the different spray nozzles may have different geometries, i.e. different opening angles, different diameters and different groove sizes and peripheral densities of the grooves, and the different liquids may have different formulations, i.e. different densities, different viscosities, different surface tensions, different volatilities, different solvent concentrations, different elasticities and the like.

Apart from that, the bell-shaped liquid spray may also be simulated dependent on environmental conditions affecting the bell-shaped liquid spray, i.e. different flows of an air and different electrostatic forces, and a plurality of different process parameters, i.e. different flow-rates of the liquid and different angular speeds of the spray nozzle.

By varying the geometry of the spray nozzle, the formulation of the liquid, the environmental conditions and the process parameters a dependency of the derived at least one parameter value on the geometry of the spray nozzle, the formulation of the liquid, the environmental conditions and the process parameters may be assessed.

It is particularly preferred that deriving at least one parameter value comprises providing a plurality of bead chains simulating a plurality of liquid jets each bead chain simulating a different liquid jet of the bell-shaped liquid spray and calculating the motion of each bead chain. As the bell-shaped liquid spray comprises a plurality of liquid jets also a plurality of bead chains is required for a realistic simulation.

In many embodiments deriving at least one parameter value comprises calculating a diameter of the liquid jet, a diameter of a droplet of the liquid jet, a trajectory of a droplet of the liquid jet, a brush size of the bell-shaped liquid spray, a brush thickness of the bell-shaped liquid spray and/or a deposited coating profile of the bell-shaped liquid spray. The indicated parameters are relevant for an effect of the bell spraying process, i.e. the coating deposited on the surface. Of course, the listed parameter values are exemplarily only and not exclusive.

Advantageously, deriving at least one parameter value comprises calculating an average and a standard variation of a tensile and/or compressive stress at a bead and determine a breaking-up of the bead chain at the bead into a plurality of droplets when the calculated tensile and/or compressive stress at the bead exceeds a predetermined break-up threshold. The tensile stress works in a longitudinal direction of the bead chain. The compressive stress works in a transversal direction of the bead chain. The bead chain breaks up when the compressive stress and/or the tensile stress is incompatible with a stable bead chain.

After the break-up of the bead chain, a movement of the droplet is defined by the following reduced equation of motion which only superimposes aerodynamic drag force and the gravitational force:

$$m_i \frac{d^2 \vec{x_i}}{dt^2} = \vec{F}_{d,i} + \vec{F}_{g,i}$$

A diameter and/or a velocity of a droplet may be calculated by requiring a conservation of momentum and a conservation of energy for the plurality of droplets, respectively. The two physical conservation laws allow for easily defining the structural and dynamical properties of the droplets after the break-up of the liquid jets.

In other embodiments deriving at least one parameter value comprises calculating an impact spreading size of a droplet on a surface by using an empiric formula for a ratio between a maximum spreading diameter of the droplet and a diameter of the droplet before hitting the surface. The empiric formula

$$\frac{D_{max}}{D} = 1 + 0.48 We^{0.5} exp(-1.48 We^{0.22} Re^{-0.21})$$

may be used. Therein, $D_{max}$ is a maximum spreading diameter of the droplet, D is the diameter of the droplet before hitting the surface, $We$ is the Weber number (defined by $We = \rho U_0^2 a_0 / \gamma$) and $Re$ is the Reynolds number (defined by $Re = \rho U_0 a_0 / \mu$). In the latter definitions $\rho$ is a density of the liquid, $U_0$ is a velocity of the droplet, $a_0$ is a radius of the droplet, $\gamma$ is a surface tension of the liquid and $\mu$ is a viscosity of the liquid.

Calculating a motion may comprise defining an angular speed of the rotating spray nozzle in a range from 15.000 rpm to 45.000 rpm and/or a flow rate of the liquid in a range from 50 ml/min to 250 ml/min. The indicated angular speeds and flow rates are relevant for most practical bell spraying processes.

In advantageous embodiments the at least one derived parameter value is compared with a corresponding empiric parameter value. Comparing simulation results with empiric measurements is a means for verifying a reliability and accuracy of the simulation method. Due to a successful verification, the predictive power of the simulation method is increased.

It is particularly advantageous that the empiric parameter value is derived from an image of a bell-shaped liquid spray comprising a polymethyl methacrylate solution in water. Polymethyl methacrylate (PMMA) may be provided with rheological properties very similar to those of a solvent-based clear-coat formulation and, thus, may readily resemble a clear-coat being used as a top layer of a multi-level coating of car body parts.

For instance, a PMMA solution having the following properties may be used.

| Density | 1038 kg/m$^3$ |
| --- | --- |
| Surface tension coefficient | 0.0297 N/m |
| Viscosity | 0.161 Pas |
| Relaxation time | 0.009 s |

Preferably the method is executed by a processor executing a program code implementing the method. In this way simulating the bell-shaped liquid spray may be automated at least partially which increases an efficiency and accuracy of the simulation process.

Another aspect of the invention is a computer program product for simulating a bell-shaped liquid spray, comprising a data carrier storing a program code to be executed by a processor. The data carrier may be used for installing the stored program code and/or for upgrading an installed program code with the stored program code.

According to the invention the program code implements an inventive method. The computer program product, hence, allows for an efficient and accurate simulation of a bell-shaped liquid spray.

It is an essential advantage of the inventive method that a bell-shaped liquid spray is simulated very efficiently and accurately. As a consequence, the simulation of the bell-shaped liquid spray requires less computational time than simulating the bell-shaped liquid spray using conventional computational fluid dynamics (CFD).

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

**Brief description of the drawings**

Fig. 1    schematically shows a lateral view of an arrangement for generating a bell-shaped liquid spray to be simulated in a method according to an embodiment of the invention;

Fig. 2    schematically shows three images captured with the arrangement shown in fig. 1;

Fig. 3    shows a graph of first parameter values derived by carrying out a method according to an embodiment of the invention as compared to corresponding empiric parameter values;

Fig. 4    shows a graph of second parameter values derived by carrying out the method according to the embodiment of the invention as compared to corresponding empiric parameter values;

Fig. 5    shows a graph of third parameter values derived by carrying out the method according to the embodiment of the invention as compared to corresponding empiric parameter values;

Fig. 6    shows graphs of fourth and fifth parameter values derived by carrying out the method according to the embodiment of the invention;

Fig. 7    shows graphs of fourth and fifth parameter values derived by carrying out the method according to the embodiment of the invention;

Fig. 8    shows graphs of sixth, seventh and eighth parameter values derived by carrying out the method according to the embodiment of the invention;

Fig. 9    shows graphs of sixth, seventh and eighth parameter values derived by carrying out the method according to the embodiment of the invention;

Fig. 10    shows graphs of sixth, seventh and eighth parameter values derived by carrying out the method according to the embodiment of the invention;

Fig. 11    shows graphs of sixth, seventh and eighth parameter values derived by carrying out the method according to the embodiment of the invention.

**Detailed description of the drawings**

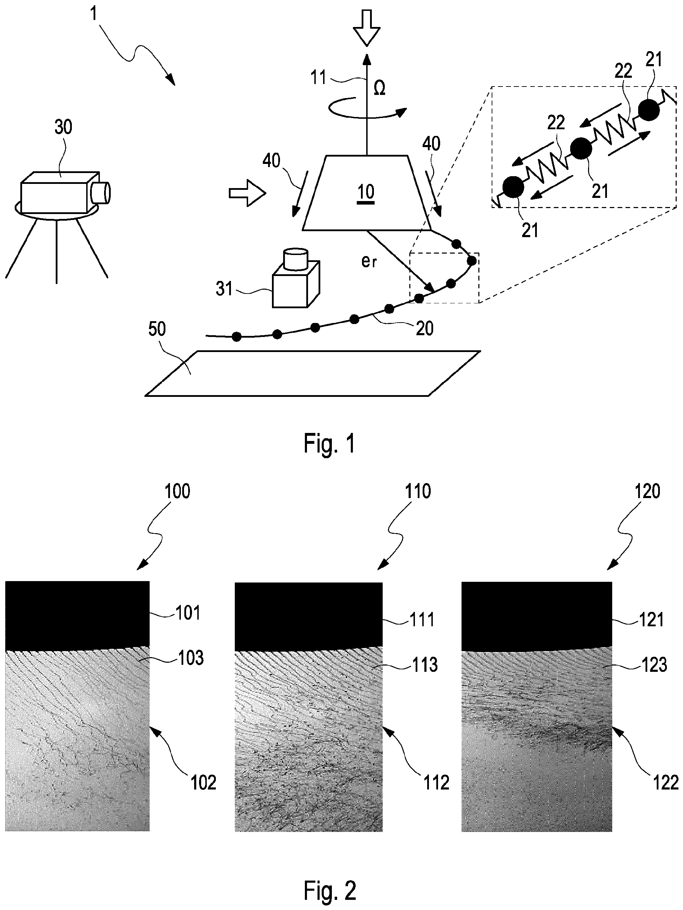

Fig. 1 schematically shows a lateral view of an arrangement 1 for generating a bell-shaped liquid spray 102, 112, 122 (see fig. 2 below) to be simulated in a method according to an embodiment of the invention. The arrangement 1 may, for instance, be used by a car manufacturer for providing car body parts with a coating, particularly a clear-coat.

The arrangement 1 comprises a bell-shaped spray nozzle 10 having a plurality of radial grooves (not visible) being arranged equally-spaced at an inner periphery of a free edge of the spray nozzle 10. The arrangement 1 further comprises a high-speed camera 30 for capturing images 100, 110, 120 (see fig. 2 below) of the spray nozzle 10 and a bell-shaped liquid spray 102, 112, 122 generated by the spray nozzle 10 and a light source 31 for illuminating the spray nozzle 10 and the generated bell-shaped liquid spray 102, 112, 122. Furthermore, the arrangement 1 comprises a surface 50 to be coated by the liquid.

During operation of the spray nozzle 10 the spray nozzle 10 rotates at an angular speed in a range from 15.000 rotations per minute (rpm) to 45.000 rpm about a rotational axis 11 and a liquid, i.e. a coating material like a clear-coat, is continuously fed to the spray nozzle 10 at a flow rate of the liquid in a range from 50 milliliter per minute (ml/min) to 250 ml/min. The fed liquid is released from the grooves of the rotating spray nozzle 10 and forms a bell-shaped liquid spray 102, 112, 122 comprising a plurality of separate liquid jets 103, 113, 123 (see fig. 2 below) each breaking up into a plurality of droplets which are deposited on the surface 50. The bell-shaped liquid spray 102, 112, 122 may be additionally shaped by an air flow 40 being directed to the surface 50 and extending along an outer periphery of the spray nozzle 10.

Fig. 2 schematically shows three images 100, 110, 120 captured by the high speed-camera 30 of the arrangement 1 shown in fig. 1. Each image 100, 110, 120 comprises a portion 101, 111, 121 of the spray nozzle 10 and a portion of the bell-shaped liquid spray 102, 112, 122 comprising a plurality of liquid jets 103, 113, 123.

The first image 100 is captured with the spray nozzle 101, 111, 121 rotating at an angular speed of 15.000 rpm and the liquid being fed to the spray nozzle 10 at a flow rate of 50 ml/min. The second image 110 is captured with the spray nozzle 10 rotating at an angular speed of 30.000 rpm and the liquid being fed to the spray nozzle 101, 111, 121 at a flow rate of 250 ml/min. The third image is captured with the spray nozzle 101, 111, 121 rotating at an angular speed of 45.000 rpm and the liquid being fed to the spray nozzle 101, 111, 121 at flow rate of 250 ml/min.

Returning now to fig. 1, the bell-shaped liquid spray 102, 112, 122 is simulated by carrying out the inventive method. The method comprises the following steps and is preferably executed by a processor executing a program code implementing the method. The program code may be stored on a data carrier of a computer program product for simulating the bell-shaped liquid spray 102, 112, 122.

A bead chain 20 is provided comprising a plurality of beads 21 and a plurality of springs 22 each pair of neighboring beads 21 being connected by a spring 22, wherein the bead chain 20 simulates a liquid jet 103, 113, 123 of the bell-shaped liquid spray 102, 112, 122 generated by the rotating spray nozzle 10. A portion of the bead chain 20 is illustrated in the enlarged detail of fig. 1.

Then a motion of the bead chain 20 is calculated. Calculating a motion preferably comprises defining an angular speed of the rotating spray nozzle 10 in a range from 15.000 rpm to 45.000 rpm and/or a flow rate of the liquid in a range from 50 ml/min to 250 ml/min. Calculating a motion may further comprise calculating a motion of each bead 21 of the bead chain 20 in a Lagrangian approach and setting up an equation of motion for each bead 21 of the bead chain 20 according to Newton's second law and solving the set-up equation of motion.

Setting up the equation of motion preferably comprises equalizing an acceleration of each bead 21 multiplied with a mass of the bead 21 and a force impacting on the bead 21. The force impacting on the bead 21 may comprise a superposition of a gravitational force, a centrifugal force, an electrostatic force, an aerodynamic drag force, a viscoelastic force and/or a surface tension force each impacting on the bead.

After that at least one parameter value 250, 350, 450, 530, 530', 530", 630, 630', 630", 730, 730', 730", 830, 830', 830", 930, 930', 930", 1030, 1030', 1030", 1130, 1130', 1130", 1230, 1230', 1230" of the bell-shaped liquid spray 102, 112, 122 is derived from the calculated motion. Deriving the at least one parameter value may comprise providing a plurality of bead chains 20 simulating a plurality of liquid jets 103, 113, 123 each bead chain 20 simulating a different liquid jet 103, 113, 123 of the bell-shaped liquid spray 102, 112, 122 and calculating the motion of each bead chain 20.

Deriving the at least one parameter value preferably further comprises calculating a diameter of the liquid jet 103, 113, 123, a diameter of a droplet of the liquid jet 103, 113, 123, a trajectory of a droplet of the liquid jet 103, 113, 123, a brush size of the bell-shaped liquid spray 102, 112, 122, a brush thickness of the bell-shaped liquid spray 102, 112, 122 and/or a deposited coating profile of the bell-shaped liquid spray 102, 112, 122.

Deriving the at least one parameter value may also comprise calculating an average and a standard variation of a tensile and/or compressive stress at a bead 21 and determining a breaking-up of the bead chain 20 at the bead 21 into a plurality of droplets when the calculated tensile and/or compressive stress at the bead 21 exceeds a predetermined break-up threshold. A diameter and/or a velocity of a droplet is preferably calculated by requiring a conservation of momentum and a conservation of energy for the plurality of droplets, respectively.

Deriving the at least one parameter value may alternatively or additionally comprise calculating an impact spreading size of a droplet on the surface 50 by using an empiric formula for a ratio between a maximum spreading diameter of the droplet and a diameter of the droplet before hitting the surface 50.

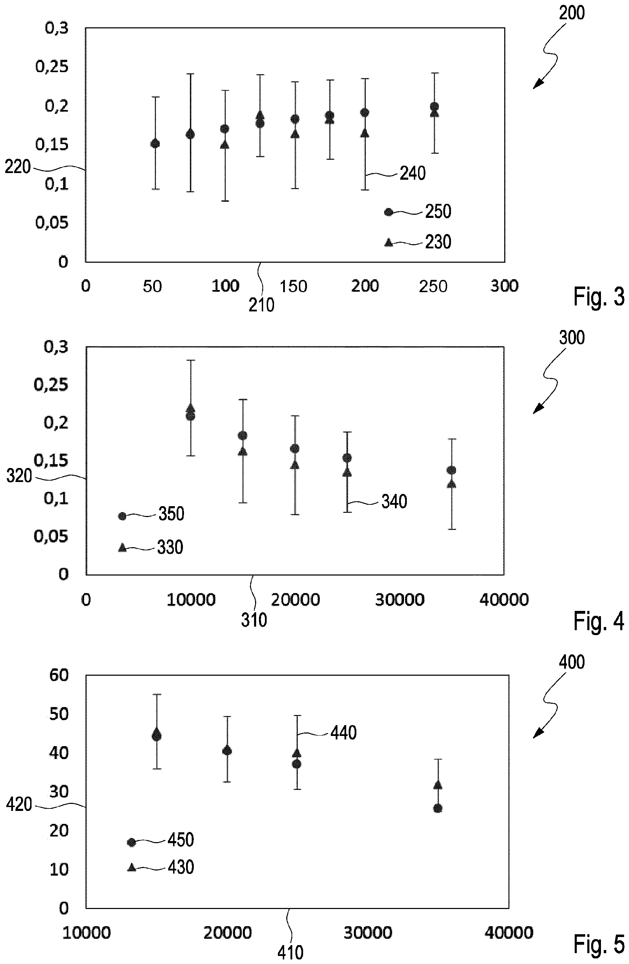

The parameter value 250, 350, 450 is preferably compared with a corresponding empiric parameter value 230, 330, 430 which comparison is exemplarily shown in figures 3, 4 and 5 below. The empiric parameter value 230, 330, 430 may be derived from the image 110, 120, 130 of the bell-shaped liquid spray 102, 112, 122. The liquid and, hence, the bell-shaped liquid spray 102, 112, 122 may be chosen to comprise a polymethyl methacrylate (PMMA) solution in water in order to resemble a clear-coat.

Fig. 3 shows a graph 200 of a first parameter value 250 derived by carrying out a method according to an embodiment of the invention as compared to a corresponding empiric parameter value 230. The graph 200 has an abscissa 210 indicating a flow rate of the liquid in ml/min and an ordinate 220 indicating an average diameter of the liquid jet in millimeter (mm). The graph 200 comprises eight average diameters of the liquid jet at eight different flow rates of the liquid both as parameter values 250 derived by the inventive method and corresponding empiric parameter values 230 with error bars 240 derived from captured images 100, 110, 120. As can be seen, the parameter values 250 derived by the inventive method are close to the empiric parameter values 230 and within the error bars 240.

Fig. 4 shows a graph 300 of a second parameter value 350 derived by carrying out the method according to the embodiment of the invention as compared to a corresponding empiric parameter value 330. The graph 300 has an abscissa 310 indicating an angular speed of the spray nozzle in rpm and an ordinate 320 indicating an average diameter of the liquid jet in mm. The graph 300 comprises five average diameters of the liquid jet at five different angular speeds of the spray nozzle both as second parameter values 350 derived by the inventive method and corresponding empiric parameter values 330 with error bars 340 derived from captured images 100, 110, 120. As can be seen, the second parameter values 350 derived by the inventive method are close to the empiric parameter values 330 and within the error bars 340.

Fig. 5 shows a graph 400 of a third parameter value 450 derived by carrying out the method according to the embodiment of the invention as compared to a corresponding empiric parameter value 430. The graph 400 has an abscissa 410 indicating an angular speed of the spray nozzle in rpm and an ordinate 420 indicating an average diameter of the droplet in micrometer ($\mu$m). The graph 400 comprises four average diameters of the droplet at four different angular speeds of the spray nozzle both as third parameter values 450 derived by the inventive method and corresponding empiric parameter values 430 with error bars 440 derived from captured images 100, 110, 120. As can be seen, the third parameter values 450 derived by the inventive method are close to the empiric parameter values 430 and within the error bars 440.

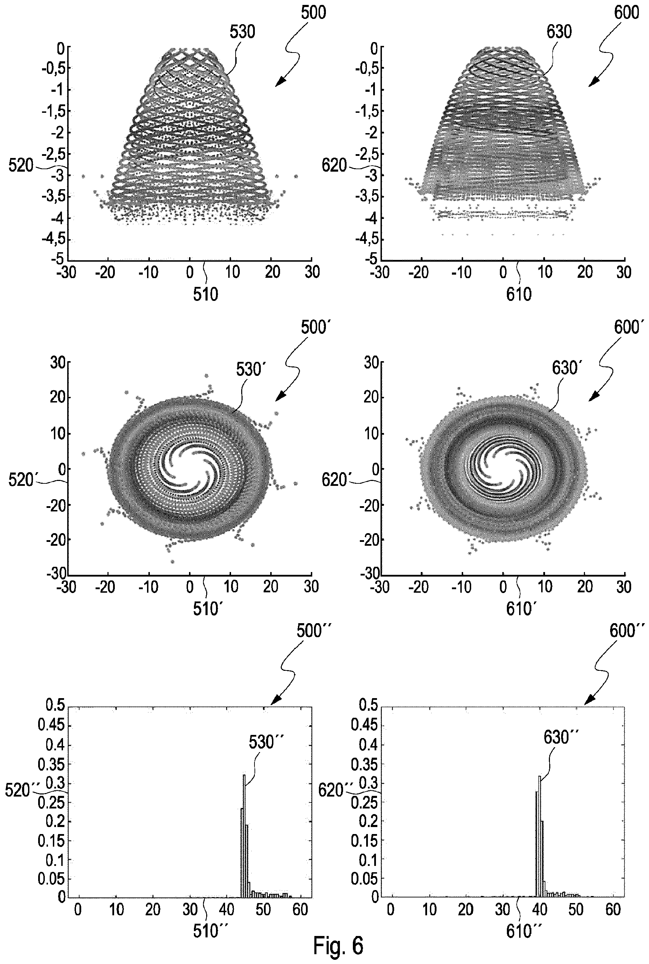

Fig. 6 shows graphs 500, 500', 500", 600, 600', 600" of fourth and fifth parameter values 530, 530', 530", 630, 630', 630" derived by carrying out the method according to the embodiment of the invention. The graph 500 has an abscissa 510 indicating an X coordinate extending in a plane of the surface 50 in centimeters (cm) and an ordinate 520 indicating a Z coordinate extending perpendicular to the surface 50 in cm. The graph 500 comprises a plurality of droplet trajectories as fourth parameter values 530 derived by the inventive method in a lateral view with the spray nozzle rotating at an angular speed of 15.000 rpm and the liquid being provided at a flow rate of 150 ml/min.

The graph 500' has an abscissa 510' indicating an X coordinate extending in a plane of the surface 50 in cm and an ordinate 520' indicating a Y coordinate extending perpendicular to the X coordinate in the plane of the surface 50 in cm. The graph 500' comprises a plurality of droplet trajectories as fourth parameter values 530' derived by the inventive method in a top view with the spray nozzle rotating at an angular speed of 15.000 rpm and the liquid being provided at a flow rate of 150 ml/min.

The graph 500" has an abscissa 510" indicating a diameter of a droplet in $\mu$m and an ordinate 520" indicating a frequency of occurrence of a droplet diameter. The graph 500" comprises a distribution of frequencies of droplet diameters as the fifth parameter value 530" derived by the inventive method with the spray nozzle rotating at an angular speed of 15.000 rpm and the liquid being provided at a flow rate of 150 ml/min.

The graph 600 has an abscissa 610 indicating an X coordinate extending in a plane of the surface 50 in cm and an ordinate 620 indicating a Z coordinate extending perpendicular to the surface 50 in cm. The graph 600 comprises a plurality of droplet trajectories as fourth parameter values 630 derived by the inventive method in a lateral view with the spray nozzle rotating at an angular speed of 25.000 rpm and the liquid being provided at a flow rate of 150 ml/min.

The graph 600' has an abscissa 610' indicating an X coordinate extending in a plane of the surface 50 in cm and an ordinate 620' indicating a Y coordinate extending perpendicular to the X coordinate in the plane of the surface 50 in cm. The graph 600' comprises a plurality of droplet trajectories as fourth parameter values 630' derived by the inventive method in a top view with the spray nozzle rotating at an angular speed of 25.000 rpm and the liquid being provided at a flow rate of 150 ml/min.

The graph 600" has an abscissa 610" indicating a diameter of a droplet in $\mu$m and an ordinate 620" indicating a frequency of occurrence of a droplet diameter. The graph 600" comprises a distribution of frequencies of droplet diameters as the fifth parameter value 630" derived by the inventive method with the spray nozzle rotating at an angular speed of 25.000 rpm and the liquid being provided at a flow rate of 150 ml/min.

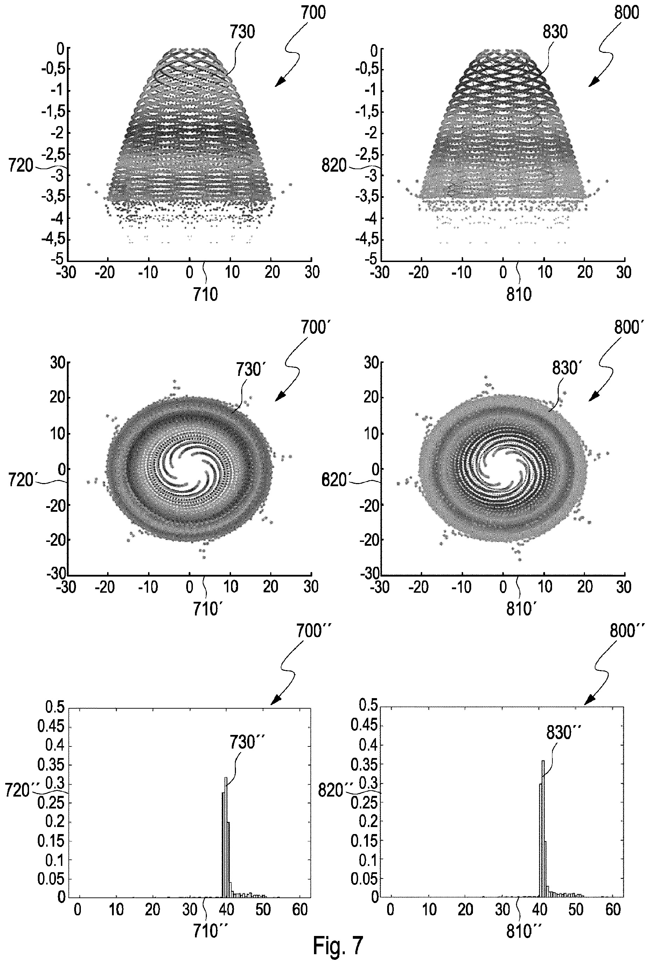

Fig. 7 shows graphs 700, 700', 700", 800, 800', 800" of fourth and fifth parameter values 730, 730', 730", 830, 830', 830" derived by carrying out the method according to the embodiment of the invention. The graph 700 has an abscissa 710 indicating an X coordinate extending in a plane of the surface 50 in cm and an ordinate 720 indicating a Z coordinate extending perpendicular to the surface 50 in cm. The graph 700 comprises a plurality of droplet trajectories as fourth parameter values 730 derived by the inventive method in a lateral view with the spray nozzle rotating at an angular speed of 20.000 rpm and the liquid being provided at a flow rate of 150 ml/min.

The graph 700' has an abscissa 710' indicating an X coordinate extending in a plane of the surface 50 in cm and an ordinate 720' indicating a Y coordinate extending perpendicular to the X coordinate in the plane of the surface 50 in cm. The graph 700' comprises a plurality of droplet trajectories as fourth parameter values 730' derived by the inventive method in a top view with the spray nozzle rotating at an angular speed of 20.000 rpm and the liquid being provided at a flow rate of 150 ml/min.

The graph 700" has an abscissa 710" indicating a diameter of a droplet in $\mu$m and an ordinate 720" indicating a frequency of occurrence of a droplet diameter. The graph 700" comprises a distribution of frequencies of droplet diameters as the fifth parameter value 730" derived by the inventive method with the spray nozzle rotating at an angular speed of 20.000 rpm and the liquid being provided at a flow rate of 150 ml/min.

The graph 800 has an abscissa 810 indicating an X coordinate extending in a plane of the surface 50 in cm and an ordinate 820 indicating a Z coordinate extending perpendicular to the surface 50 in cm. The graph 800 comprises a plurality of droplet trajectories as fourth parameter values 830 derived by the inventive method in a lateral view with the spray nozzle rotating at an angular speed of 20.000 rpm and the liquid being provided at a flow rate of 250 ml/min.

The graph 800' has an abscissa 810' indicating an X coordinate extending in a plane of the surface 50 in cm and an ordinate 820' indicating a Y coordinate extending perpendicular to the X coordinate in the plane of the surface 50 in cm. The graph 800' comprises a plurality of droplet trajectories as fourth parameter values 830' derived by the inventive method in a top view with the spray nozzle rotating at an angular speed of 20.000 rpm and the liquid being provided at a flow rate of 250 ml/min.

The graph 800" has an abscissa 810" indicating a diameter of a droplet in $\mu$m and an ordinate 820" indicating a frequency of occurrence of a droplet diameter. The graph 800" comprises a distribution of frequencies of droplet diameters as the fifth parameter value 830" derived by the inventive method with the spray nozzle rotating at an angular speed of 20.000 rpm and the liquid being provided at a flow rate of 250 ml/min.

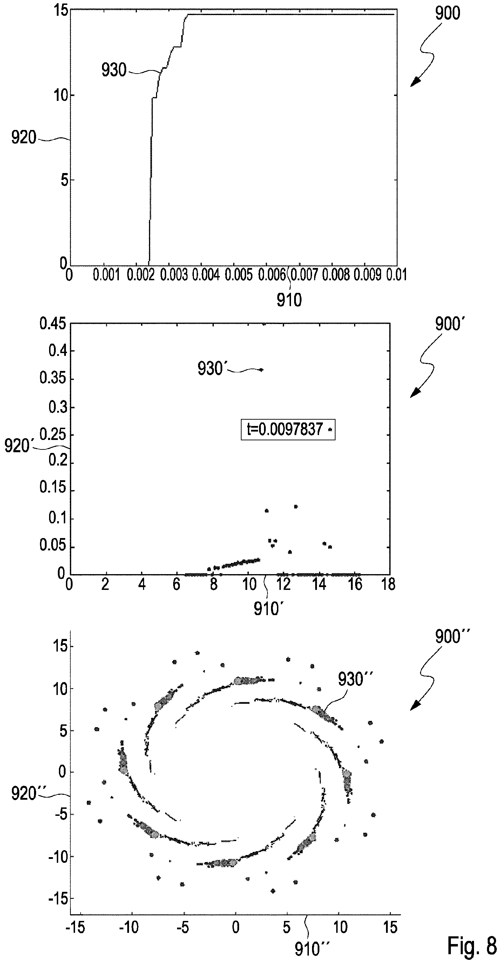

Fig. 8 shows graphs 900, 900', 900" of sixth, seventh and eighth parameter values 930, 930', 930" derived by carrying out the method according to the embodiment of the invention. The graph 900 has an abscissa 910 indicating a time in seconds (s) and an ordinate 920 indicating a maximum brush size, i.e. a maximum radius of the coverage of the deposited coating, in cm. The graph comprises the maximum radius of coverage of the deposited coating as a function of the time as the sixth parameter value 930.

The graph 900' has an abscissa 910' indicating a radial distance from a center of the spray nozzle 10 in cm and an ordinate 920' indicating a brush thickness, i.e. a thickness of the deposited coating, in mm. The graph 910' comprises a plurality of thicknesses of the deposited coating at a plurality of different radial distances as seventh parameter values 930'.

The graph 900" has an abscissa 910" indicating an X coordinate extending in a plane of the surface 50 in cm and an ordinate 920" indicating a Y coordinate extending perpendicular to the X coordinate in the plane of the surface 50 in cm. The graph 900" comprises a profile of the deposited coating as the eighth parameter value 930".

The graphs 900, 900', 900" are obtained for a simulation time of 0,01 s and comprise the sixth, seventh and eighth parameter values 930, 930', 930" at an angular speed of the spray nozzle 10 of 15.000 rpm and at a flow rate of the liquid at 150 ml/l.

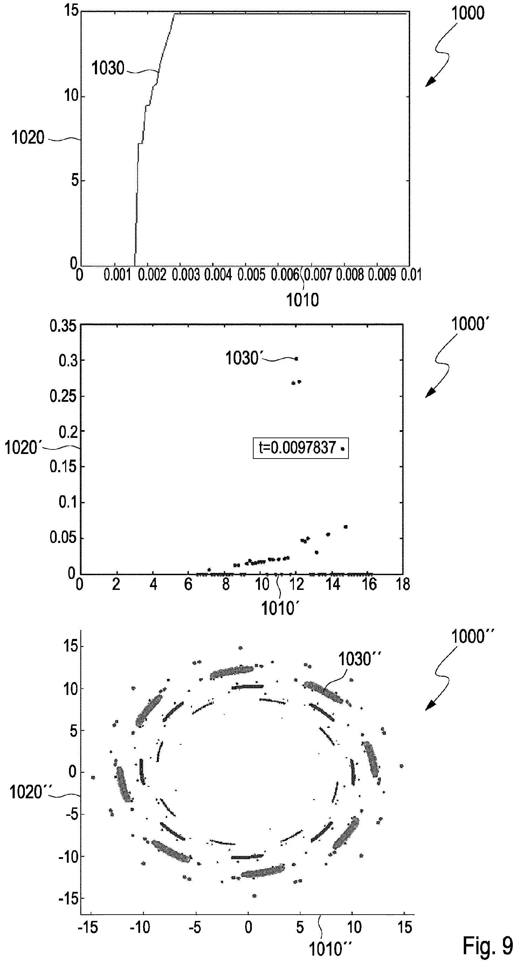

Fig. 9 shows graphs 1000, 1000', 1000" of sixth, seventh and eighth parameter values 1030, 1030', 1030" derived by carrying out the method according to the embodiment of the invention. The graph 1000 has an abscissa 1010 indicating a time in seconds (s) and an ordinate 1020 indicating a maximum brush size, i.e. a maximum radius of the coverage of the deposited coating, in cm. The graph comprises the maximum radius of coverage of the deposited coating as a function of the time as the sixth parameter value 1030.

The graph 1000' has an abscissa 1010' indicating a radial distance from a center of the spray nozzle 10 in cm and an ordinate 1020' indicating a brush thickness, i.e. a thickness of the deposited coating, in mm. The graph 1010' comprises a plurality of thicknesses of the deposited coating at a plurality of different radial distances as seventh parameter values 1030'.

The graph 1000" has an abscissa 1010" indicating an X coordinate extending in a plane of the surface 50 in cm and an ordinate 1020" indicating a Y coordinate extending perpendicular to the X coordinate in the plane of the surface 50 in cm. The graph 1010" comprises a profile of the deposited coating as the eighth parameter value 1030".

The graphs 1000, 1000', 1000" are obtained for a simulation time of 0,01 s and comprise the sixth, seventh and eighth parameter values 1030, 1030', 1030" at an angular speed of the spray nozzle 10 of 25.000 rpm and at a flow rate of the liquid at 150 ml/l.

From a comparison of figures 8 and 9 results that the maximum thickness of of the deposited coating at a lower angular speed of the spray nozzle 10 is predicted to be larger than at a higher angular speed of the spray nozzle 10. In contrast, the coverage of the deposited coating at a higher angular speed of the spray nozzle 10 is predicted to be more homogeneous than at a lower angular speed of the spray nozzle 10.

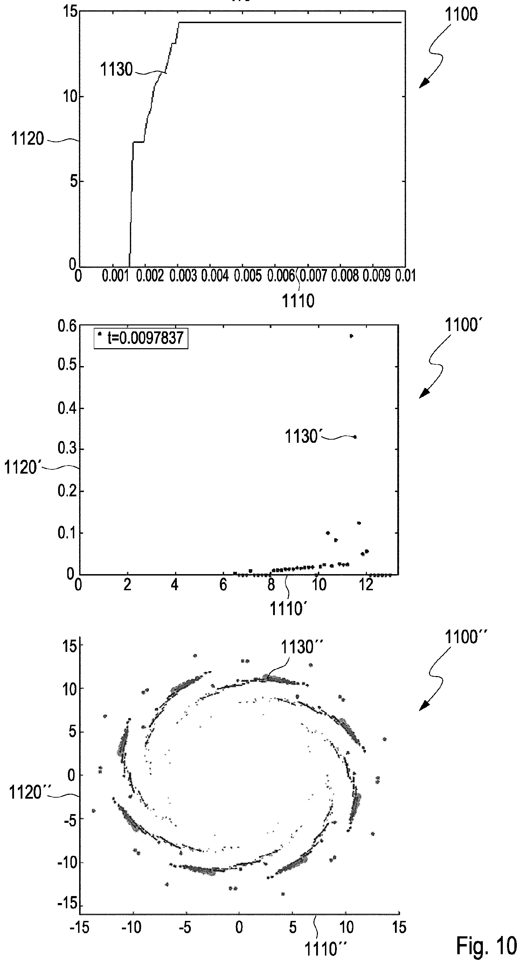

Fig. 10 shows graphs 1100, 1100', 1100" of sixth, seventh and eighth parameter values 1130, 1130', 1130" derived by carrying out the method according to the embodiment of the invention. The graph 1100 has an abscissa 1110 indicating a time in seconds (s) and an ordinate 1120 indicating a maximum brush size, i.e. a maximum radius of the coverage of the deposited coating, in cm. The graph comprises the maximum radius of coverage of the deposited coating as a function of the time as the sixth parameter value 1130.

The graph 1100' has an abscissa 1110' indicating a radial distance from a center of the spray nozzle 10 in cm and an ordinate 1120' indicating a brush thickness, i.e. a thickness of the deposited coating, in mm. The graph 1110' comprises a plurality of thicknesses of the deposited coating at a plurality of different radial distances as seventh parameter values 1130'.

The graph 1100" has an abscissa 1110" indicating an X coordinate extending in a plane of the surface 50 in cm and an ordinate 1120" indicating a Y coordinate extending perpendicular to the X coordinate in the plane of the surface 50 in cm. The graph 1110" comprises a profile of the deposited coating as the eighth parameter value 1130".

The graphs 1100, 1100', 1100" are obtained for a simulation time of 0,01 s and comprise the sixth, seventh and eighth parameter values 1130, 1130', 1130" at an angular speed of the spray nozzle 10 of 20.000 rpm and at a flow rate of the liquid at 150 ml/l.

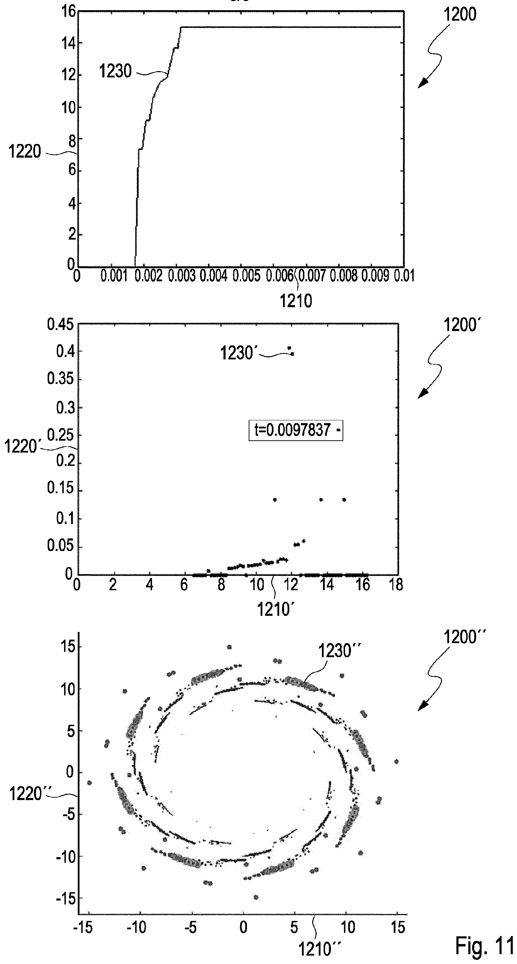

Fig. 11 shows graphs 1200, 1200', 1200" of sixth, seventh and eighth parameter values 1230, 1230', 1230" derived by carrying out the method according to the embodiment of the invention. The graph 1200 has an abscissa 1210 indicating a time in seconds (s) and an ordinate 1220 indicating a maximum brush size, i.e. a maximum radius of the coverage of the deposited coating, in cm. The graph comprises the maximum radius of coverage of the deposited coating as a function of the time as the sixth parameter value 1230.

The graph 1200' has an abscissa 1210' indicating a radial distance from a center of the spray nozzle 10 in cm and an ordinate 1220' indicating a brush thickness, i.e. a thickness of the deposited coating, in mm. The graph 1200' comprises a plurality of thicknesses of the deposited coating at a plurality of different radial distances as seventh parameter values 1230'.

The graph 1200" has an abscissa 1210" indicating an X coordinate extending in a plane of the surface 50 in cm and an ordinate 1220" indicating a Y coordinate extending perpendicular to the X coordinate in the plane of the surface 50 in cm. The graph 1200" comprises a profile of the deposited coating as the eighth parameter value 1230".

The graphs 1200, 1200', 1200" are obtained for a simulation time of 0,01 s and comprise the sixth, seventh and eighth parameter values 1230, 1230', 1230" at an angular speed of the spray nozzle 10 of 20.000 rpm and at a flow rate of the liquid at 250 ml/l.

From a comparison of figures 10 and 11 results that the maximum thickness of the deposited coating at a lower flow rate of the liquid is predicted to be larger than at a higher flow rate of the liquid. In contrast, the coverage of the deposited coating at a higher flow rate of the liquid is predicted to be more homogeneous than at a lower flow rate of the liquid.

Although the graphs of figures 6 to 11 only illustrate a dependency of parameter values on process parameters, different graphs may be generated illustrating a dependency of parameter values on a geometry of the spray nozzle, a formulation of the liquid or environmental conditions.

**Reference Numerals**

| | |
|---|---|
| 1 | arrangement |
| 10 | spray nozzle |
| 11 | rotational axis |
| 20 | liquid jet |
| 21 | bead |
| 22 | spring |
| 30 | camera |
| 31 | light source |
| 40 | air flow |
| 50 | surface |
| 100 | image |
| 101 | portion of spray nozzle |
| 102 | bell-shaped liquid spray |
| 103 | liquid jet |
| 110 | image |
| 111 | portion of spray nozzle |

| | |
|------|---------------------------|
| 112  | bell-shaped liquid spray  |
| 113  | liquid jet                |
| 120  | image                     |
| 121  | portion of spray nozzle   |
| 122  | bell-shaped liquid spray  |
| 123  | liquid jet                |
| 200  | graph                     |
| 210  | abscissa                  |
| 220  | ordinate                  |
| 230  | empiric parameter value   |
| 240  | empiric error bar         |
| 250  | derived parameter value   |
| 300  | graph                     |
| 310  | abscissa                  |
| 320  | ordinate                  |
| 330  | empiric parameter value   |
| 340  | empiric error bar         |
| 350  | derived parameter value   |
| 400  | graph                     |
| 410  | abscissa                  |
| 420  | ordinate                  |
| 430  | empiric parameter value   |
| 440  | empiric error bar         |
| 450  | derived parameter value   |
| 500  | graph                     |
| 510  | abscissa                  |
| 520  | ordinate                  |
| 530  | derived parameter value   |
| 500' | graph                     |
| 510' | abscissa                  |
| 520' | ordinate                  |
| 530' | derived parameter value   |
| 500" | graph                     |
| 510" | abscissa                  |
| 520" | ordinate                  |
| 530" | derived parameter value   |
| 600  | graph                     |
| 610  | abscissa                  |
| 620  | ordinate                  |
| 630  | derived parameter value   |
| 600' | graph                     |
| 610' | abscissa                  |
| 620' | ordinate                  |
| 630' | derived parameter value   |
| 600" | graph                     |
| 610" | abscissa                  |
| 620" | ordinate                  |
| 630" | derived parameter value   |
| 700  | graph                     |
| 710  | abscissa                  |
| 720  | ordinate                  |
| 730  | derived parameter value   |
| 700' | graph                     |
| 710' | abscissa                  |
| 720' | ordinate                  |
| 730' | derived parameter value   |
| 700" | graph                     |
| 710" | abscissa                  |

| 720" | ordinate |
|---|---|
| 730" | derived parameter value |
| 800 | graph |
| 810 | abscissa |
| 820 | ordinate |
| 830 | derived parameter value |
| 800' | graph |
| 810' | abscissa |
| 820' | ordinate |
| 830' | derived parameter value |
| 800" | graph |
| 810" | abscissa |
| 820" | ordinate |
| 830" | derived parameter value |
| 900 | graph |
| 910 | abscissa |
| 920 | ordinate |
| 930 | derived parameter value |
| 900' | graph |
| 910' | abscissa |
| 920' | ordinate |
| 930' | derived parameter value |
| 900" | graph |
| 910" | abscissa |
| 920" | ordinate |
| 930" | derived parameter value |
| 1000 | graph |
| 1010 | abscissa |
| 1020 | ordinate |
| 1030 | derived parameter value |
| 1000' | graph |
| 1010' | abscissa |
| 1020' | ordinate |
| 1030' | derived parameter value |
| 1000" | graph |
| 1010" | abscissa |
| 1020" | ordinate |
| 1030" | derived parameter value |
| 1100 | graph |
| 1110 | abscissa |
| 1120 | ordinate |
| 1130 | derived parameter value |
| 1100' | graph |
| 1110' | abscissa |
| 1120' | ordinate |
| 1130' | derived parameter value |
| 1100" | graph |
| 1110" | abscissa |
| 1120" | ordinate |
| 1130" | derived parameter value |
| 1200 | graph |
| 1210 | abscissa |
| 1220 | ordinate |
| 1230 | derived parameter value |
| 1200' | graph |
| 1210' | abscissa |
| 1220' | ordinate |
| 1230' | derived parameter value |

1200"    graph
1210"    abscissa
1220"    ordinate
1230"    derived parameter value

**Claims**

1. A method for simulating a bell-shaped liquid spray (102, 112, 122), comprising the steps of:

   ∘ providing a bead chain (20) comprising a plurality of beads (21) and a plurality of springs (22) each pair of neighboring beads (21) being connected by a spring (22), the bead chain (20) simulating a liquid jet (103, 113, 123) of a bell-shaped liquid spray (102, 112, 122) generated by a rotating spray nozzle (10);
   ∘ calculating a motion of the bead chain (20);
   ∘ deriving at least one parameter value (250, 350, 450, 530, 530', 530", 630, 630', 630", 730, 730', 730", 830, 830', 830", 930, 930', 930", 1030, 1030', 1030", 1130, 1130', 1130", 1230, 1230', 1230") of the bell-shaped liquid spray (102, 112, 122) from the calculated motion.

2. The method according to claim 1, wherein calculating a motion comprises calculating a motion of each bead (21) of the bead chain (20) in a Lagrangian approach.

3. The method according to claim 2, wherein calculating a motion comprises setting up an equation of motion for each bead (21) of the bead chain (20) according to Newton's second law and solving the set-up equation of motion.

4. The method according to claim 3, wherein setting up an equation of motion comprises equalizing an acceleration of each bead (21) multiplied with a mass of the bead (21) and a force impacting on the bead (21).

5. The method according to claim 4, wherein setting up an equation of motion comprises superimposing a gravitational force, a centrifugal force, an electrostatic force, an aerodynamic drag force, a viscoelastic force and/or a surface tension force impacting on the bead.

6. The method according to one of claims 1 to 5, wherein deriving at least one parameter value comprises providing a plurality of bead chains (20) simulating a plurality of liquid jets (103, 113, 123) each bead chain (20) simulating a different liquid jet (103, 113, 123) of the bell-shaped liquid spray (102, 112, 122) and calculating the motion of each bead chain (20).

7. The method according to one of claims 1 to 6, wherein deriving at least one parameter value comprises calculating a diameter of the liquid jet (103, 113, 123), a diameter of a droplet of the liquid jet (103, 113, 123), a trajectory of a droplet of the liquid jet (103, 113, 123), a brush size of the bell-shaped liquid spray (102, 112, 122), a brush thickness of the bell-shaped liquid spray (102, 112, 122) and/or a deposited coating profile of the bell-shaped liquid spray (102, 112, 122).

8. The method according to claim 7, wherein deriving at least one parameter value comprises calculating an average and a standard variation of a tensile and/or compressive stress at a bead (21) and determine a breaking-up of the bead chain (20) at the bead (21) into a plurality of droplets when the calculated tensile and/or compressive stress at the bead (21) exceeds a predetermined break-up threshold.

9. The method according to claim 8, wherein a diameter and/or a velocity of a droplet is calculated by requiring a conservation of momentum and a conservation of energy for the plurality of droplets, respectively.

10. The method according to one of claims 7 to 9, wherein deriving at least one parameter value comprises calculating an impact spreading size of a droplet on a surface (50) by using an empiric formula for a ratio between a maximum spreading diameter of the droplet and a diameter of the droplet before hitting the surface (50).

11. The method according to one of claims 1 to 10, wherein calculating a motion comprises defining an angular speed of the rotating spray nozzle (10) in a range from 15.000 rpm to 45.000 rpm and/or a flow rate of the liquid in a range from 50 ml/min to 250 ml/min.

12. The method according to one of claims 1 to 11, wherein the at least one derived parameter value (250, 350, 450) is compared with a corresponding empiric parameter value (230, 330, 430).

13. The method according to claim 12, wherein the empiric parameter value (230, 330, 430) is derived from an image (110, 120, 130) of a bell-shaped liquid spray (102, 112, 122) comprising a polymethyl methacrylate solution in water.

14. The method according to one of claims 1 to 11, being executed by a processor executing a program code implementing the method.

15. A computer program product for simulating a bell-shaped liquid spray (102, 112, 122), comprising a data carrier storing a program code to be executed by a processor, the program code implementing a method according to one of claims 1 to 11.

Fig. 1

Fig. 2

Fig. 3

Fig. 4

Fig. 5

Fig. 6

Fig. 7

Fig. 8

Fig. 9

Fig. 10

Fig. 11

Europäisches
Patentamt
European
Patent Office
Office européen
des brevets

**EUROPEAN SEARCH REPORT**

Application Number

EP 20 15 7170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIVVELA MOUNICA JYOTHI ET AL: "Discretized modeling for centrifugal spinning of viscoelastic liquids", JOURNAL OF NON-NEWTONIAN FLUID MECHANICS, vol. 247, 28 June 2017 (2017-06-28), pages 62-77, XP085165642, DOI: 10.1016/J.JNNFM.2017.06.005 | 1-10, 12-15 | INV. G06F30/20 ADD. G06F113/08 |
| Y | * the whole document * <br> * abstract * <br> * page 63, column 1, paragraph 3 * <br> * page 62, column 2, paragraph 2 * <br> * page 63, column 2, paragraph 1 * <br> * page 64, column 1, paragraph 1 * <br> * page 64, column 2, paragraph 3 * <br> * page 64, column 2, paragraphs 2 and 3 * <br> * page 76, column 2, paragraph 2 * <br> * equation (4) * | 11 | |
| A | ----- <br> DIVVELA MOUNICA JYOTHI ET AL: "Discretized modeling of beads-on-a-string morphology from electrically driven, conducting, and viscoelastic polymer jets", JOURNAL OF APPLIED PHYSICS, AMERICAN INSTITUTE OF PHYSICS, vol. 121, no. 13, 7 April 2017 (2017-04-07), XP012217815, DOI: 10.1063/1.4979917 [retrieved on 2017-04-07] * the whole document * <br> * abstract * <br> * equation (1) * <br> * equation (18) * <br> * section iv * | 1-15 | TECHNICAL FIELDS SEARCHED (IPC) <br><br> G06F |

-/--

The present search report has been drawn up for all claims

| Place of search | Date of completion of the search | Examiner |
|---|---|---|
| Munich | 13 August 2020 | Rungger, Matthias |

EPO FORM 1503 03.82 (P04C01)

page 1 of 3

Europäisches
Patentamt

European
Patent Office

Office européen
des brevets

## EUROPEAN SEARCH REPORT

Application Number

EP 20 15 7170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ASAI A ET AL: "IMPACT OF AN INK DROP ON PAPER", 19930101, vol. 37, no. 2, 1 January 1993 (1993-01-01), pages 205-207, XP000887353, * the whole document * * equation (7) * * figure 2 * | 1-15 | |
| Y | ADNAN DARWISH AHMAD ET AL: "Spatial Positioning and Operating Parameters of a Rotary Bell Sprayer: 3D Mapping of Droplet Size Distributions", FLUIDS, vol. 4, no. 3, 5 September 2019 (2019-09-05), page 165, XP055722389, DOI: 10.3390/fluids4030165 | 11 | |
| A | * the whole document * * abstract * * figures 7,9 * | 1-10, 12-15 | TECHNICAL FIELDS SEARCHED (IPC) |
| A | DIONISIS STEFANITSIS ET AL: "Improved droplet breakup models for spray applications", INTERNATIONAL JOURNAL OF HEAT AND FLUID FLOW, vol. 76, 5 March 2019 (2019-03-05), pages 274-286, XP055722523, DOI: 10.1016/j.ijheatfluidflow.2019.02.010 * the whole document * * abstract * * page 275, column 1, paragraph 2 * | 1-15 | |

-/--

The present search report has been drawn up for all claims

| Place of search | Date of completion of the search | Examiner |
|---|---|---|
| Munich | 13 August 2020 | Rungger, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 3

Europäisches
Patentamt

European
Patent Office

Office européen
des brevets

# EUROPEAN SEARCH REPORT

Application Number

EP 20 15 7170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | C. WAGNER ET AL: "Droplet Detachment and Satellite Bead Formation in Viscoelastic Fluids", PHYSICAL REVIEW LETTERS, vol. 95, no. 16, 14 October 2005 (2005-10-14), page 83, XP055722516, DOI: 10.1103/PhysRevLett.95.164504 * the whole document * * abstract * * figures 1,2 * * page 4, column 2, paragraph 2 * ----- | 1-15 | |

TECHNICAL FIELDS
SEARCHED (IPC)

The present search report has been drawn up for all claims

| Place of search | Date of completion of the search | Examiner |
|---|---|---|
| Munich | 13 August 2020 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)